(19) Europäisches Patentamt
European Patent Office
Office européen des brevets

(11) **EP 2 642 322 B1**

(12) **EUROPEAN PATENT SPECIFICATION**

(45) Date of publication and mention
of the grant of the patent:
**10.07.2019 Bulletin 2019/28**

(51) Int Cl.:
***G02B 6/036*** (2006.01)    ***G02B 6/028*** (2006.01)

(21) Application number: **12166927.9**

(22) Date of filing: **07.05.2012**

(54) **Bend-resistant multimode optical fiber**

Biegesteife multimodale Glasfaser

Fibre optique multimodale résistante aux courbures

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.03.2012 US 201213428520**

(43) Date of publication of application:
**25.09.2013 Bulletin 2013/39**

(73) Proprietor: **Draka Comteq B.V.
2627 AN Delft (NL)**

(72) Inventors:
• **Molin, Denis
91210 Draveil (FR)**
• **Sillard, Pierre
78150 Le Chesnay (FR)**
• **Bigot-Astruc, Marianne
91460 Marcoussis (FR)**
• **Gooijer, Frans
5627 ME Eindhoven (NL)**
• **Achten, Franciscus Johannes
5032 EM Tilburg (NL)**

(74) Representative: **Algemeen Octrooi- en
Merkenbureau B.V.
P.O. Box 645
5600 AP Eindhoven (NL)**

(56) References cited:
**EP-A1- 2 166 386    EP-A1- 2 333 593
EP-A1- 2 503 368    WO-A1-2011/109263**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Field of the invention

The present invention relates to the field of fiber optic transmission and, more specifically, to a multimode optical fiber having reduced bending losses.

Background of the invention

An optical fiber (*i.e.,* a glass fiber typically surrounded by one or more coating layers) conventionally includes an optical fiber core, which transmits and/or amplifies an optical signal, and an optical cladding, which confines the optical signal within the core. Accordingly, the refractive index of the core $n_c$ is typically greater than the refractive index of the optical cladding $n_g$ (*i.e.,* $n_c > n_g$).

Multimode optical fibers are commonly used for short-distance applications requiring a broad bandwidth, such as local networks or LAN (local area network). The core of a multimode optical fiber typically has a diameter of between about 50 microns and 62.5 microns, whereas the core of a single-mode optical fiber typically has a diameter of between about 6 microns and 9 microns. In a multimode optical fiber, for a given wavelength, several optical modes are propagated simultaneously along the optical fiber.

Multimode optical fibers have been the subject of international standardization under the ITU-T G.651.1 recommendations (July 2007), which, in particular, define criteria (e.g., bandwidth, numerical aperture, and core diameter) that relate to the requirements for optical fiber compatibility.

The numerical aperture (NA) of an optical fiber can be approximated by the following equation:

$$NA = \sqrt{n_c^2 - n_g^2}$$

where $n_c$ is the refractive index of the central core and $n_g$ is the refractive index of the outer cladding (*e.g.*, an outer optical cladding).

For optical fibers, the refractive index profile is generally classified according to the graphical appearance of the function that associates the refractive index with the radius of the optical fiber. Conventionally, the distance r to the center of the optical fiber is shown on the x-axis, and the difference between the refractive index (at radius r) and the refractive index of the optical fiber's outer cladding (e.g., an outer optical cladding) is shown on the y-axis. The refractive index profile is referred to as a "step" profile, "trapezoidal" profile, "parabolic" profile, or "triangular" profile for graphs having the respective shapes of a step, a trapezoid, a parabola, or a triangle. These curves are generally representative of the optical fiber's theoretical or set profile. Constraints in the manufacture of the optical fiber, however, may result in a slightly different actual profile.

For the same propagation medium (*i.e.,* in a step-index multimode optical fiber), the different modes have different group delay times. This difference in group delay times results in a time lag (*i.e.,* a delay) between the pulses propagating along different radial offsets of the optical fiber. This delay causes a broadening of the resulting light pulse. Broadening of the light pulse increases the risk of the pulse being superimposed onto a trailing pulse, which reduces the bandwidth (*i.e.,* data rate) supported by the optical fiber. The bandwidth, therefore, is linked to the group delay time of the optical modes propagating in the multimode core of the optical fiber. Thus, to guarantee a broad bandwidth, it is desirable for the group delay times of all the modes to be identical. Stated differently, the intermodal dispersion should be zero, or at least minimized, for a given wavelength.

To reduce intermodal dispersion, the multimode optical fibers used in telecommunications generally have a core with a refractive index that decreases progressively from the center of the optical fiber to its interface with a cladding (*i.e.,* an "alpha" core profile). Such an optical fiber has been used for a number of years, and its characteristics have been described in *"Multimode Theory of Graded-Core Fibers"* by D. Gloge et al., Bell system Technical Journal 1973, pp. 1563-1578, and summarized in *"Comprehensive Theory of Dispersion in Graded-Index Optical Fibers"* by G. Yabre, Journal of Lightwave Technology, February 2000, Vol. 18, No. 2, pp. 166-177.

A graded-index profile (*i.e.,* an alpha-index profile) can be described by a relationship between the refractive index value n and the distance r from the center of the optical fiber according to the following equation:

$$n = n_1 \sqrt{1 - 2\Delta\left(\frac{r}{a}\right)^{\alpha}}$$

(Equation 1)

wherein,

$\alpha \geq 1$, and $\alpha$ is a non-dimensional parameter that is indicative of the shape of the index profile;
$n_1$ is the maximum refractive index of the optical fiber's core;
a is the radius of the optical fiber's core; and

$$\Delta = \frac{\left(n_1^2 - n_0^2\right)}{2 n_1^2}$$

(Equation 2)

where $n_0$ is the minimum refractive index of the multimode core, which may correspond to the refractive index of the outer cladding (most often made of silica).

A multimode optical fiber with a graded index (*i.e.*, an alpha profile) therefore has a core profile with a rotational symmetry such that along any radial direction of the optical fiber the value of the refractive index decreases continuously from the center of the optical fiber's core to its periphery. When a multimode light signal propagates in such a graded-index core, the different optical modes experience differing propagation mediums (*i.e.,* because of the varying refractive indices). This, in turn, affects the propagation speed of each optical mode differently. Thus, by adjusting the value of the parameter $\alpha$, it is possible to obtain a group delay time that is virtually equal for all of the modes. Stated differently, the refractive index profile can be modified to reduce or even eliminate intermodal dispersion.
Typically, multimode optical fibers with higher numerical apertures have lower macrobending losses (referred to hereafter as "bending losses").
Conventional multimode optical fibers having a central core diameter of more than 50 microns are generally expected to provide sufficient bend resistance for many applications. Such exemplary optical fibers may have a central core diameter of 62.5 microns and a numerical aperture of 0.275 or a central core diameter of 80 microns and a numerical aperture of 0.3.
Nevertheless, for tighter bend radii (*e.g.*, 5 millimeters), such optical fibers exhibit significant bending losses that may be critical for high speed transmission (*e.g.*, in compact consumer electronic devices).
International Publication No. WO 2010/036684 deals with large-core optical fibers. The disclosed optical fibers, however, have a central-core radius a and a relative refractive index difference $\Delta$ such that:

$$\frac{\sqrt{2\Delta}}{a} < 5.1 \times 10^{-3} \ \mu m^{-1}.$$

The central cores of the disclosed optical fibers fail to provide reduced microbending losses, because, for a given $\Delta$ value, enlarging the central core will result in larger microbending losses. Furthermore, the relationships between the disclosed central-core radius a and the relative refractive index difference $\Delta$ lead to undesirably large microbending losses.
Therefore, a need exists for a multimode optical fiber having reduced bending losses and a central-core diameter of greater than 50 microns.
Document WO2011/109263 discloses a high numerical aperture multimode optical fiber comprising a graded index core, inner cladding, an outer cladding, and a depressed trench between the inner and the outer cladding.

Summary of the invention

In a first aspect, the present invention is defined by independent claim 1 and relates to a multimode optical fiber, comprising:

* a central core surrounded by an outer optical cladding having a refractive index value $n_{cl}$ said central core having (*i*) an outer radius $r_1$ of about 36 microns or greater, (*ii*) a maximum refractive index value $n_0$, (*iii*) a graded-index profile with respect to said outer optical cladding, and (*iv*) a relative refractive index difference:

$$\Delta = \frac{n_0^2 - n_{cl}^2}{2n_0^2}$$

* an inner cladding positioned between said central core and said outer cladding, said inner cladding having an outer radius $r_2$; and
* a depressed trench positioned between said inner cladding and said outer optical cladding, said depressed trench having an outer radius $r_3$, a refractive index difference $\Delta n_3$ with respect to said outer optical cladding, and a volume $V_3$;
* wherein $\frac{\sqrt{2\Delta}}{r_1}$ is about 5.6x10$^{-3}$ $\mu$m$^{-1}$ or greater.

According to another embodiment of said first aspect, $\frac{\sqrt{2\Delta}}{r_1}$ is about 5.7x10$^{-3}$ $\mu$m$^{-1}$ or greater.

According to yet another embodiment of said first aspect, said depressed trench's volume $V_3$ is between about -1710%-$\mu$m$^2$ and -635 %-$\mu$m$^2$.

According to yet another embodiment of said first aspect, said central core's outer radius $r_1$ is 36 microns or greater; and said depressed trench's volume $V_3$ is -670 %-$\mu$m$^2$ or greater.

According to yet another embodiment of said first aspect, said central core's outer radius $r_1$ is 37 microns or greater; and $\frac{\sqrt{2\Delta}}{r_1}$ is about 5.6x10$^{-3}$ $\mu$m$^{-1}$ or greater.

According to yet another embodiment of said first aspect, said central core's outer radius $r_1$ is 38 microns or greater; and said depressed trench's volume V3 is -750 %-$\mu$m$^2$ or greater.

According to yet another embodiment of said first aspect, said central core's outer radius $r_1$ is 39 microns or greater; and $\frac{\sqrt{2\Delta}}{r_1}$ is about 5.6x10$^{-3}$ $\mu$m$^{-1}$ or greater.

According to yet another embodiment of said first aspect, said central core's outer radius $r_1$ is 39 microns or greater; and said depressed trench's volume $V_3$ is -790 %-$\mu$m$^2$ or greater.

According to yet another embodiment of said first aspect, said central core's outer radius $r_1$ is 40 microns or greater.

In a second aspect, the present invention relates to a multimode optical fiber, comprising:

* a central core surrounded by an outer optical cladding having a refractive index value $n_{cl}$, said central core having (*i*) an outer radius $r_1$ of between about 35 microns and 50 microns, (*ii*) a maximum refractive index value $n_0$, (*iii*) a graded-index profile with respect to said outer optical cladding, and (*iv*) a relative refractive index difference:

$$\Delta = \frac{n_0^2 - n_{cl}^2}{2n_0^2}$$

* an inner cladding positioned between said central core and said outer cladding, said inner cladding having an outer radius $r_2$; and
* a depressed trench positioned between said inner cladding and said outer optical cladding, said depressed trench having an outer radius $r_3$, a refractive index difference $\Delta n_3$ with respect to said outer optical cladding of between about -10x10$^{-3}$ and -5x10$^{-3}$, and a volume $V_3$;
* wherein $\frac{\sqrt{2\Delta}}{r_1}$ is about 5.6x10$^{-3}$ $\mu$m$^{-1}$ or greater;
* wherein the difference $r_2$-$r_1$ between said inner cladding's outer radius $r_2$ and said central core's outer radius $r_1$ is

between about 1 micron and 3 microns;

* wherein the difference $r_3$-$r_2$ between said depressed trench's outer radius $r_3$ and said inner cladding's outer radius $r_2$ is between about 3 microns and 7 microns; and

* wherein, for two turns around a radius of curvature of 5 millimeters at a wavelength of 850 nanometers, the optical fiber has bending losses of less than about 0.3 dB.

According to another yet embodiment of said second aspect, $\dfrac{\sqrt{2\Delta}}{r_1}$ is about $5.6\times10^{-3}$ $\mu$m$^{-1}$ or greater.

According to another yet embodiment of said second aspect, $\dfrac{\sqrt{2\Delta}}{r_1}$ is about $5.9\times10^{-3}$ $\mu$m$^{-1}$ or greater.

According to another yet embodiment of said second aspect, said central core's outer radius $r_1$ is 36 microns or greater; and $\dfrac{\sqrt{2\Delta}}{r_1}$ is about $5.6\times10^{-3}$ $\mu$m$^{-1}$ or greater.

According to another yet embodiment of said second aspect, said central core's outer radius $r_1$ is 37 microns or greater; and said depressed trench's volume $V_3$ is -710 %-$\mu$m$^2$ or greater.

According to another yet embodiment of said second aspect, said central core's outer radius $r_1$ is 38 microns or greater; and $\dfrac{\sqrt{2\Delta}}{r_1}$ is about $5.6\times10^{-3}$ $\mu$m$^{-1}$ or greater.

According to another yet embodiment of said second aspect, said central core's outer radius $r_1$ is between about 39 microns and 41 microns.

According to another yet embodiment of said second aspect, said depressed trench's volume $V_3$ is -650 %-$\mu$m$^2$ or greater.

According to another yet embodiment of said second aspect, said central core's outer radius $r_1$ is 40 microns or greater; and said depressed trench's volume $V_3$ is -830 %-$\mu$m$^2$ or greater.

According to another yet embodiment of said second aspect, the difference $r_2$-$r_1$ between said inner cladding's outer radius $r_2$ and said central core's outer radius $r_1$ is less than 2 microns.

According to another yet embodiment of said second aspect, the difference $r_3$-$r_2$ between said depressed trench's outer radius $r_3$ and said inner cladding's outer radius $r_2$ is less than 5 microns.

According to another yet embodiment of said second aspect, for two turns around a radius of curvature of 5 millimeters at a wavelength of 850 nanometers, the optical fiber has bending losses of less than about 0.2 dB.

In a third aspect, the present invention relates to an optical system comprising the optical fiber according to the second aspect of the present invention.

Accordingly, in one aspect, the present invention embraces an optical fiber that includes a central core surrounded by an outer cladding (*e.g.*, an outer optical cladding). The outer cladding has a refractive index value $n_{cl}$. The central core has an outer radius $r_1$, a maximum refractive index value $n_0$, and a graded-index profile with respect to the outer cladding. The central core also has a relative refractive index difference:

$$\Delta = \frac{n_0^2 - n_{cl}^2}{2n_0^2}$$

The central core's outer radius $r_1$ is typically between about 30 microns and 50 microns (*e.g.*, 35 microns to 50 microns). Typically, the central core's outer radius $r_1$ and relative refractive index difference $\Delta$ satisfy the following inequality:

$$\frac{\sqrt{2\Delta}}{r_1} \geq 5.6\times10^{-3}\ \mu m^{-1}.$$

An inner cladding is positioned between the central core and the outer cladding (*e.g.*, immediately surrounding the central core). The inner cladding has an outer radius $r_2$ and a refractive index difference $\Delta n_2$ with respect to the outer cladding. Typically, the difference $r_2$-$r_1$ between the inner cladding's outer radius $r_2$ and the central core's outer radius $r_1$ is between about 1 micron and 3 microns.

A depressed trench is positioned between the inner cladding and the outer cladding (*e.g.*, immediately surrounding the inner cladding). The depressed trench has an outer radius $r_3$ and a negative refractive index difference $\Delta n_3$ with respect to the outer cladding. Typically, the difference $r_3$-$r_2$ between the depressed trench's outer radius $r_3$ and the inner cladding's outer radius $r_2$ is between about 3 microns and 7 microns. The depressed trench's refractive index difference $\Delta n_3$ is typically between about $-10 \times 10^{-3}$ and $-5 \times 10^{-3}$.

In an exemplary embodiment, for two turns around a radius of curvature of 5 millimeters at a wavelength of 850 nanometers, the optical fiber has bending losses of less than about 0.3 dB.

In another exemplary embodiment, for two turns around a radius of curvature of 5 millimeters at a wavelength of 850 nanometers, the optical fiber has bending losses of less than about 0.2 dB.

In yet another exemplary embodiment, the central core's outer radius $r_1$ and relative refractive index difference $\Delta$ satisfy the following inequality:

$$\frac{\sqrt{2\Delta}}{r_1} \geq 5.6 \times 10^{-3}\ \mu\text{m}^{-1}.$$

In yet another exemplary embodiment, the central core's outer radius $r_1$ is between about 35 microns and 50 microns (*e.g.,* between about 35 microns and 45 microns).

In yet another exemplary embodiment, the central core's outer radius $r_1$ is greater than about 36 microns (*e.g.,* about 37 microns or greater).

In yet another exemplary embodiment, the central core's outer radius $r_1$ is greater than about 38 microns (*e.g.,* between about 39 microns and 41 microns).

In yet another exemplary embodiment, the central core's outer diameter (*i.e.,* $2r_1$) is about 62.5 microns.

In yet another exemplary embodiment, the central core's outer diameter (*i.e.,* $2r_1$) is about 80 microns (*i.e.,* outer radius $r_1$ is about 40 microns).

In another aspect, the present invention embraces a multimode optical system that includes an optical fiber in accordance with the foregoing.

The foregoing illustrative summary, as well as other exemplary objectives and/or advantages of the invention, and the manner in which the same are accomplished, are further explained within the following detailed description and its accompanying drawings.

Brief description of the drawings

Figure 1    graphically depicts the refractive index profile of an exemplary optical fiber according to the present invention.

Figure 2    graphically depicts bending losses as a function of bending radius (*i.e.,* radius of curvature) for an exemplary optical fiber according to the present invention and a comparative optical fiber.

Figure 3    graphically depicts bending losses as a function of bending radius (*i.e.,* radius of curvature) for another exemplary optical fiber according to the present invention and another comparative optical fiber.

Figure 4    depicts an optical-fiber cable undergoing a pinch test.

Detailed description of the invention

The present invention relates to a multimode optical fiber, comprising: a central core surrounded by an outer optical cladding having a refractive index value $n_{cl}$, said central core having (*i*) an outer radius $r_1$ of about 35 microns or greater, (*ii*) a maximum refractive index value $n_0$, (*iii*) a graded-index profile with respect to said outer optical cladding,

$$\Delta = \frac{n_0^2 - n_{cl}^2}{2n_0^2}\ ;$$

and (*iv*) a relative refractive index difference:    an inner cladding positioned between said central core and said outer cladding, said inner cladding having an outer radius $r_2$; and a depressed trench positioned between said inner cladding and said outer optical cladding, said depressed trench having an outer radius $r_3$, a refractive index

difference $\Delta n_3$ with respect to said outer optical cladding, and a volume $V_3$; wherein $\dfrac{\sqrt{2\Delta}}{r_1}$ is about 5.6x10$^{-3}$ $\mu$m$^{-1}$ or greater and wherein said depressed trench's volume $V_3$ is -635 %-$\mu$m$^2$ or greater.

In embodiments of the present invention:

- $\dfrac{\sqrt{2\Delta}}{r_1}$ is about 5.6x10$^{-3}$ $\mu$m$^{-1}$ or greater, even more preferably about 5.7x10$^{-3}$ $\mu$m$^{-1}$ or greater, even more preferably about 5.9x10$^{-3}$ $\mu$m$^{-1}$ or greater;

- the central core's outer radius $r_1$ is equal to or lower than 50 microns;
- the central core's outer radius $r_1$ is 36 microns or greater, preferably 37 microns or greater, more preferably 38 microns or greater, even more preferably 39 microns or greater, even more preferably 40 microns or greater, most preferably between about 39 microns and 41 microns;
- said depressed trench's volume $V_3$ is -650 %-$\mu$m$^2$ or greater, preferably $V_3$ is -670 %-$\mu$m$^2$ or greater, preferably $V_3$ is -710 %-$\mu$m$^2$ or greater, more preferably $V_3$ is -750 %-$\mu$m$^2$ or greater, even more preferably $V_3$ is -790 %-$\mu$m$^2$ or greater, even more preferably $V_3$ is -830 %-$\mu$m$^2$ or greater;
- the difference $r_2$-$r_1$ between said inner cladding's outer radius $r_2$ and said central core's outer radius $r_1$ is between about 1 micron and 3 microns, preferably equal to or lower than 2 micron;
- the difference $r_3$-$r_2$ between said depressed trench's outer radius $r_3$ and said inner cladding's outer radius $r_2$ is between about 3 microns and 7 microns, preferably equal to or lower than 5 microns;
- the refractive index difference $\Delta n_3$ with respect to said outer optical cladding of between about -10x10$^{-3}$ and -5x10$^{-3}$;
- for two turns around a radius of curvature of 5 millimeters at a wavelength of 850 nanometers, the optical fiber has bending losses of less than about 0.3 dB, preferably less than about 0.2 dB.

Moreover, the invention relates to a multimode optical fiber, comprising: a central core surrounded by an outer optical cladding having a refractive index value $n_{cl}$, said central core having (*i*) an outer radius $r_1$ of between about 35 microns and 50 microns, (*ii*) a maximum refractive index value $n_0$, (*iii*) a graded-index profile with respect to said outer optical cladding, and (*iv*) a relative refractive index difference:

$$\Delta = \frac{n_0^2 - n_{cl}^2}{2n_0^2};$$

wherein $\dfrac{\sqrt{2\Delta}}{r_1}$ is about 5.6x10$^{-3}$ $\mu$m$^{-1}$ or greater, an inner cladding positioned between said central core and said outer cladding, said inner cladding having an outer radius $r_2$; wherein the difference $r_2$-$r_1$ between said inner cladding's outer radius $r_2$ and said central core's outer radius $r_1$ is between about 1 micron and 3 microns; a depressed trench positioned between said inner cladding and said outer optical cladding, said depressed trench having an outer radius $r_3$, a refractive index difference $\Delta n_3$ with respect to said outer optical cladding of between about -10x10$^{-3}$ and -5x10$^{-3}$, and a volume $V_3$; wherein the difference $r_3$-$r_2$ between said depressed trench's outer radius $r_3$ and said inner cladding's outer radius $r_2$ is between about 3 microns and 7 microns; and wherein said depressed trench's volume $V_3$ is -635 %-$\mu$m$^2$ or greater; wherein, for two turns around a radius of curvature of 5 millimeters at a wavelength of 850 nanometers, the optical fiber has bending losses of less than about 0.3 dB.

Moreover, the invention relates to an optical system comprising the optical fiber according to the present invention.

The present invention embraces a multimode optical fiber having reduced bending losses and a central-core diameter of greater than 50 microns.

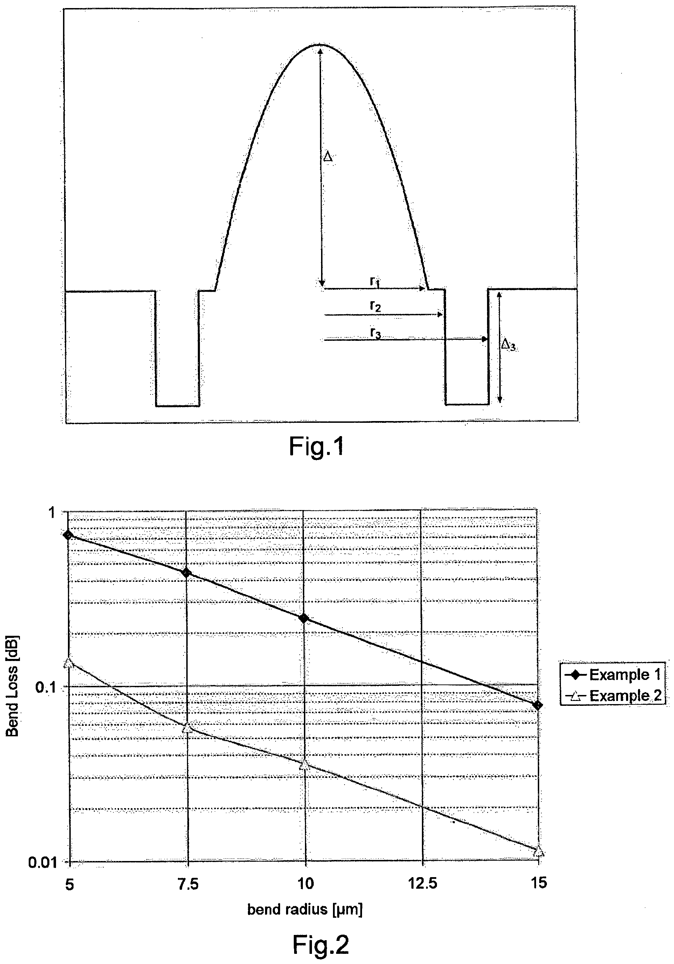

Figure 1 depicts the refractive index profile of an exemplary optical fiber in accordance with the present invention. The exemplary optical fiber is a multimode optical fiber that includes a central core (*e.g.*, an inner core) surrounded by an outer cladding (*e.g.,* an outer optical cladding).

As depicted, the exemplary optical fiber also includes an inner cladding positioned between the central core and the outer cladding (*e.g.,* immediately surrounding the central core). A depressed trench is positioned between the inner cladding and the outer optical cladding (*e.g.*, immediately surrounding the inner cladding).

The central core has an outer radius $r_1$ that is typically between 30 microns and 50 microns, more typically 35 microns or greater (*e.g.*, between about 39 microns and 41 microns). The central core also has a graded-index profile relative to the outer cladding. The central core's outer radius $r_1$ and relative refractive index difference $\Delta$ typically satisfy

the following inequality:

$$\frac{\sqrt{2\Delta}}{r_1} \geq 5.6 \times 10^{-3} \ \mu m^{-1}.$$

The central core's relative refractive index difference $\Delta$ is defined by the following equation:

$$\Delta = \frac{n_0^2 - n_{cl}^2}{2n_0^2},$$

where $n_0$ is the maximum refractive index value of the central core (typically corresponding to the refractive index value of the center of the central core) and $n_{cl}$ is the refractive index value of the outer cladding.

The optical fiber's inner cladding has an outer radius $r_2$. Typically, the difference $r_2$-$r_1$ between the inner cladding's outer radius $r_2$ and the central core's outer radius $r_1$ *(e.g.,* the radial distance between the central core's outer radius and the inner radius of the depressed trench) is between 1 micron and 3 microns (*e.g.,* about 2 microns or less).

The depressed trench has an outer radius $r_3$ and a negative refractive index difference $\Delta n_3$ with respect to the outer cladding. Typically, the difference $r_3$-$r_2$ between the depressed trench's outer radius $r_3$ and the inner cladding's outer radius $r_2$ (*e.g.,* the width of the depressed trench) is between 3 microns and 7 microns (*e.g.,* about 5 microns or less, such as about 4 microns). The depressed trench's refractive index difference $\Delta n_3$ (*e.g.,* the depth of the depressed trench) is typically between $-10 \times 10^{-3}$ and $-5 \times 10^{-3}$.

The present multimode optical fiber provides excellent macrobending performance. For example, for two turns around a radius of curvature of 5 millimeters at a wavelength of 850 nanometers, the optical fiber typically has bending losses of less than 0.3 dB (*e.g.,* less than 0.2 dB). In another exemplary embodiment, for one turn around a radius of curvature of 3 millimeters at a wavelength of 850 nanometers, the optical fiber has bending losses of less than about 0.5 dB.

Exemplary multimode optical fibers in accordance with the present invention include a central core having an outer diameter of 62.5 microns (*i.e.,* 62.5-micron MMFs) and exhibit improved bend resistance. Additionally, exemplary multimode optical fibers include a central core having an outer diameter of 80 microns (*i.e.,* 80-micron MMFs) and exhibit improved bend resistance.

As noted, exemplary multimode optical fibers include a central core having a graded-index profile relative to the outer cladding (*i.e.,* Graded-Index MultiMode Fibers or GI-MMFs). The modal structure of GI-MMFs is as follows. In multimode optical fibers with the following refractive index profile:

$$n(r) = \begin{cases} n_1 \cdot \sqrt{1 - 2\Delta \cdot \left(\dfrac{r}{a}\right)^{\alpha}} & for \quad r \leq a \\ n_1 \cdot \sqrt{1 - 2\Delta} & for \quad r \geq a \end{cases} \qquad \text{(Equation 3)}$$

where $\alpha$ is between about 1.9 and 2.1, $\Delta > 1.2$ percent and $a > 30$ microns, the effective indices of the guided modes can be fairly approximated as follows:

$$\beta = kn_1 \cdot \left[ 1 - 2\Delta \left( \frac{m}{M} \right)^{\alpha/\alpha+2} \right]^{1/2} \qquad \text{(Equation 4)}$$

where m is the order of the mode, and

$$M = akn_1 \cdot \sqrt{\Delta \cdot \frac{\alpha}{\alpha + 2}}$$

$k = \dfrac{2\pi}{\lambda}$ , and $\lambda = 850$ nanometers.

For $\alpha$ approximately equal to 2, the spacing between modes is somewhat independent from the mode order m and is only a function of the central core's radius a and the central core's height $\Delta$:

$$|\Delta\beta| \propto \frac{\sqrt{2\Delta}}{a} \qquad \text{(Equation 5)}$$

For a 50-micron GI-MMF with $\Delta$ = 0.9 percent and a = 26 microns (as a threshold) this mode spacing (*i.e.*, $\Delta\beta$) is equal to $5.1\times10^{-3}$ $\mu$m$^{-1}$. Acceptable tolerances with respect to core diameter (*e.g.*, $\pm$2.5 microns) and numerical aperture (*e.g.,* $\pm$ 0.015) may be taken into account in view of constraints in the manufacturing process.

Without being bound to any particular theory, the present inventors have found that mode spacing affects microbending losses. Indeed, considering the three examples of Table 1, larger values of $\sqrt{2\Delta}/a$ (*i.e.*, the mode-spacing criterion) correlate with lower microbending losses. In Table 1, the relative refractive index difference $\Delta$ is given as a percentage.

Table 1

| $\Delta$ (%) | $r_1$ ($\mu$m) | Criterion ($\mu$m$^{-1}$) | Microbending losses @ 850nm (dB/km) | Primary coating thickness ($\mu$m) |
|---|---|---|---|---|
| 1.928 | 38.8 | $5.06\times10^{-3}$ | 27.5 | 27.935 |
| 2.059 | 39.2 | $5.18\times10^{-3}$ | 20.3 | 27.93 |
| 2.601 | 38.4 | $5.94\times10^{-3}$ | 12.1 | 27.75 |

As shown in Table 1, an increase in the criterion from $5.06\times10^{-3}$ to $5.94\times10^{-3}$ reduces microbending losses two-fold. Accordingly, exemplary optical fibers in accordance with the present invention have a central-core outer radius $r_1$ and relative refractive index difference $\Delta$ such that $\sqrt{2\Delta}/r_1$ is greater than or equal to $5.1\times10^{-3}$ $\mu$m$^{-1}$ (*e.g.*, greater than or equal to $5.2\times10^{-3}$ $\mu$m$^{-1}$), such as greater than or equal to $5.4\times10^{-3}$ $\mu$m$^{-1}$ (*e.g.*, greater than or equal to $5.6\times10^{-3}$ $\mu$m$^{-1}$). Additionally, exemplary optical fibers may have a central-core outer radius $r_1$ and relative refractive index difference $\Delta$ such that $\sqrt{2\Delta}/r_1$ is greater than or equal to $5.7\times10^{-3}$ $\mu$m$^{-1}$ (*e.g.*, greater than or equal to $5.9\times10^{-3}$ $\mu$m$^{-1}$)

Microbending may be analyzed according to the IEC fixed-diameter sandpaper drum test (*i.e.,* IEC TR62221, Method B, 40-micron grade sandpaper), which provides a microbending stress situation that affects multimode fibers even at room temperature. The IEC TR62221 microbending-sensitivity technical report and standard test procedures, includes i.a. IEC TR62221, Method B (fixed-diameter sandpaper drum) and Method D (basketweave).

To satisfy the foregoing relationship between the central core's outer radius $r_1$ and relative refractive index difference $\Delta$, larger central-core radii demand larger values for $\Delta$, as illustrated in Table 2. In Table 2, the relative refractive index difference $\Delta$ is given as a percentage.

Table 2

| a ($\mu$m) | $\Delta$ (%) | NA |
|---|---|---|
| 25 | > 0.81 | > 0.185 |
| 31.25 | > 1.27 | > 0.232 |

(continued)

| a ($\mu$m) | $\Delta$ (%) | NA |
|---|---|---|
| 40 | > 2.08 | > 0.297 |
| 50 | > 3.25 | > 0.373 |

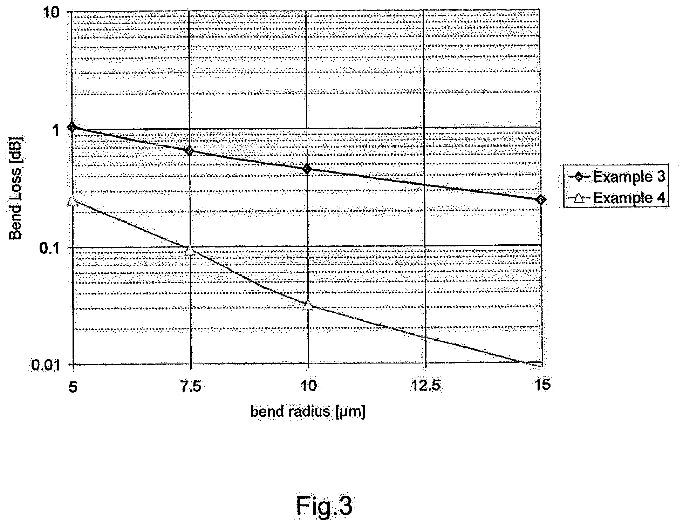

Typically, macro-bending losses are lower for optical fibers with such large numerical apertures. Furthermore, as illustrated in Figures 2 and 3, including a depressed trench between the central core and the outer cladding further improves the macro-bending behavior of these large core radii MMFs.

Figure 2 graphically depicts bending losses as a function of bending radius (*i.e.*, radius of curvature) for an exemplary trench-assisted optical fiber according to the present invention (*i.e.*, Example 2) and a comparative optical fiber in accordance with the ITU-T G.651.1 recommendations (*i.e.*, Example 1).

Figure 3 graphically depicts bending losses as a function of bending radius (*i.e.*, radius of curvature) for another exemplary trench-assisted optical fiber according to the present invention (*i.e.,* Example 4) and another comparative optical fiber under a given Encircled Flux Launch (EFL) (*i.e.*, Example 3).

The Encircled Flux (EF) in the optical fibers before bending fulfills the following criteria of Table 3:

Table 3

| radius ($\mu$m) | EF min | EF max |
|---|---|---|
| 10 | 0.2185 | 0.0635 |
| 15 | 0.38 | 0.2215 |
| 20 | 0.5249 | 0.4999 |

For 62.5-micron and 50-micron MFFs, the conditions on the EF for macrobending loss measurements are given by the ITU-T G.651.1 recommendations and the EF templates within the IEC 61280-4-1 documents.

The comparative optical (Examples 1 and 3) and the exemplary optical fibers (Examples 2 and 4) of Figures 2 and 3 correspond to optical fibers having the parameters listed in Table 4.

Table 4

| Examples | a ($\mu$m) | NA | Trench width ($\mu$m) | Trench depth (x10$^{-3}$) | Bending losses 2 turns 5 mm (dB) |
|---|---|---|---|---|---|
| 1 | 31.25 | 0.27 | none | none | 0.739 |
| 2 | 31.25 | 0.27 | 4 | -8 | 0.138 |
| 3 | 41 | 0.31 | none | none | 1.060 |
| 4 | 41 | 0.31 | 4 | -8 | 0.253 |

As noted, Examples 2 and 4 are optical fibers according to the present invention that have a depressed trench of an appropriate width (*i.e.*, $r_3$-$r_2$) and depth (*i.e.*, $\Delta n_3$). Examples 1 and 3 are comparative optical fibers lacking a depressed trench. The bending losses are measured at a wavelength of 850 nanometers.

As demonstrated by Table 4 and depicted in Figures 2 and 3, the depressed trench facilitates the achievement of reduced bending losses. Indeed, the exemplary optical fibers exhibited bending losses that were more than four times less than the bending losses of the comparative optical fibers (*i.e.,* a reduction to less than one-quarter of the comparative optical fibers' bending losses).

Advantages of large-core optical fibers having reduced bending losses are further described in "80$\mu$m-core graded-index MMF for consumer electronic devices" by D. Molin, M. Bigot-Astruc, and P. Sillard, Optoelectronic Interconnects XII, February 2, 2012, Proceedings of SPIE Vol. 8267.

Exemplary optical fibers according to the present invention include depressed trenches having particular volumes $V_3$. As used herein, the volume V of a depressed trench is defined by the following equation:

$$V = 2\pi \times \int_{r_{\text{int}}}^{r_{ext}} \Delta\%(r) \times r \times dr$$

in which $r_{\text{int}}$ and $r_{\text{ext}}$ are the inner radius and outer radius of the depressed trench, respectively, and $\Delta\%(r)$ is the depressed trench's refractive index difference with respect to the outer cladding expressed in terms of percentage. Those of ordinary skill in the art will recognize that this equation can be used for both rectangular and non-rectangular trenches.

If a depressed trench has a rectangular shape *(i.e.,* a step index profile), the equation (above) can be simplified to the following equation:

$$V = \Delta\% \times \pi \times \left(r_{ext}^{\;2} - r_{\text{int}}^{\;2}\right)$$

in which $r_{\text{ext}}$ and $r_{\text{int}}$ are the outer radius and inner radius of the depressed trench, respectively, and $\Delta\%$ is the depressed trench's refractive index difference with respect to the outer cladding expressed as a percentage.

In this regard, exemplary optical fibers include a depressed trench having a volume $V_3$ of between about -1710 %-$\mu$m$^2$ and -210 %-$\mu$m$^2$ *(e.g.,* a volume $V_3$ of about -830 %-$\mu$m$^2$). Typically, the depressed trench's volume $V_3$ is about -790 %-$\mu$m$^2$ or greater (*e.g.,* a volume $V_3$ of about -750 %-$\mu$m$^2$ or greater). More typically, the depressed trench's volume $V_3$ is about -710 %-$\mu$m$^2$ or greater (*e.g.,* a volume $V_3$ of about -670 %-$\mu$m$^2$ or greater, such as about -635 %-$\mu$m$^2$ or greater). In exemplary embodiments, the depressed trench's volume $V_3$ is between about -750 %-$\mu$m$^2$ and -450 %-$\mu$m$^2$ (*e.g.,* between about -628 %-$\mu$m$^2$ and -565 %-$\mu$m$^2$, such as about -600 %-$\mu$m$^2$).

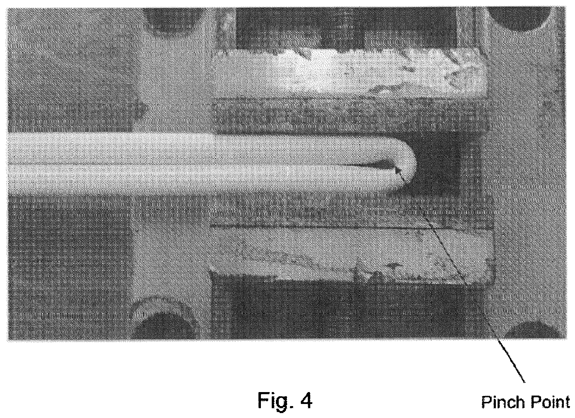

An optical-fiber cable that includes one more optical fibers in accordance with the present invention may be subjected to a pinch test as depicted in Figure 4. During the pinch test the optical-fiber cable is folded over itself so that the two cable portions on either side of the fold are substantially parallel to one another, thereby creating a pinch in the optical-fiber cable. The resulting folded cable has a maximum diameter of about twice the cable's normal diameter. At the pinch point, the optical-fiber cable is flattened and has a diameter less than its normal diameter. Although the optical-fiber cable has a reduced diameter at and near the pinch point, the remainder of the cable retains its normal diameter. The cable is held in this pinched state for about 10 minutes. After 10 minutes have elapsed and while the cable is held in the pinched state, the attenuation of the optical fibers in the cable is measured (*e.g.,* at room temperature).

During a pinch test at 850 nm, exemplary multimode optical fibers accordance with the present invention (and contained within an optical-fiber cable) typically have attenuation added losses of less than about 0.5 dB, more typically less than about 0.3 dB (*e.g.,* less than about 0.25 dB, such as less than 0.20 dB).

Exemplary optical-fiber cables capable of excellent pinch-test performance are disclosed in commonly assigned U.S. Patent Application Ser. No. 13/401,026 for an *Optical Fiber Interconnect Cable.*

The present optical fibers may facilitate the reduction in overall optical-fiber diameter. As will be appreciated by those having ordinary skill in the art, a reduced-diameter optical fiber is cost-effective, requiring less raw material. Moreover, a reduced-diameter optical fiber requires less deployment space (e.g., within a buffer tube and/or fiber optic cable), thereby facilitating increased fiber count and/or reduced cable size.

Those having ordinary skill in the art will recognize that an optical fiber with a primary coating (and an optional secondary coating and/or ink layer) typically has an outer diameter of between about 235 microns and about 265 microns ($\mu$m). The component glass fiber itself (*i.e.,* the glass core and surrounding cladding layers) typically has a diameter of about 125 microns, such that the total coating thickness is typically between about 55 microns and 70 microns.

With respect to the present optical fiber, the component glass fiber typically has an outer diameter of about 125 microns. With respect to the optical fiber's surrounding coating layers, the primary coating typically has an outer diameter of between about 175 microns and about 195 microns (*i.e.,* a primary coating thickness of between about 25 microns and 35 microns), and the secondary coating typically has an outer diameter of between about 235 microns and about 265 microns (*i.e.,* a secondary coating thickness of between about 20 microns and 45 microns). Optionally, the present optical fiber may include an outermost ink layer, which is typically between two and ten microns in thickness.

In one alternative embodiment, an optical fiber may possess a reduced diameter (*e.g.,* an outermost diameter between about 150 microns and 230 microns). In this alternative optical fiber configuration, the thickness of the primary coating and/or secondary coating is reduced, while the diameter of the component glass fiber is maintained at about 125 microns. (Those having ordinary skill in the art will appreciate that, unless otherwise specified, diameter measurements refer to outer diameters.)

By way of illustration, in such exemplary embodiments, the primary coating layer may have an outer diameter of between about 135 microns and about 175 microns *(e.g.,* about 160 microns), typically less than 165 microns (*e.g.,*

between about 135 microns and 150 microns), and usually more than 140 microns (*e.g.*, between about 145 microns and 155 microns, such as about 150 microns).

Moreover, in such exemplary embodiments, the secondary coating layer may have an outer diameter of between about 150 microns and about 230 microns (*e.g.*, more than about 165 microns, such as 190-210 microns or so), typically between about 180 microns and 200 microns. In other words, the total diameter of the optical fiber is reduced to less than about 230 microns (*e.g.*, between about 195 microns and 205 microns, and especially about 200 microns). By way of further illustration, an optical fiber may employ a secondary coating of about 197 microns at a tolerance of +/- 5 microns (*i.e.,* a secondary-coating outer diameter of between 192 microns to 202 microns). Typically, the secondary coating will retain a thickness of at least about 10 microns (*e.g.*, an optical fiber having a reduced thickness secondary coating of between 15 microns and 25 microns).

In another alternative embodiment, the outer diameter of the component glass fiber may be reduced to less than 125 microns (*e.g.*, between about 60 microns and 120 microns), perhaps between about 70 microns and 115 microns (*e.g.*, about 80-110 microns). This may be achieved, for instance, by reducing the thickness of one or more cladding layers. As compared with the prior alternative embodiment, (*i*) the total diameter of the optical fiber may be reduced (*i.e.,* the thickness of the primary and secondary coatings are maintained in accordance with the prior alternative embodiment) or (*ii*) the respective thicknesses of the primary and/or secondary coatings may be increased relative to the prior alternative embodiment (*e.g.*, such that the total diameter of the optical fiber might be maintained).

By way of illustration, with respect to the former, a component glass fiber having a diameter of between about 90 and 100 microns might be combined with a primary coating layer having an outer diameter of between about 110 microns and 150 microns (*e.g.*, about 125 microns) and a secondary coating layer having an outer diameter of between about 130 microns and 190 microns (*e.g.*, about 155 microns). With respect to the latter, a component glass fiber having a diameter of between about 90 and 100 microns might be combined with a primary coating layer having an outer diameter of between about 120 microns and 140 microns (*e.g.*, about 130 microns) and a secondary coating layer having an outer diameter of between about 160 microns and 230 microns (*e.g.,* about 195-200 microns).

Reducing the diameter of the component glass fiber might make the resulting optical fiber more susceptible to microbending attenuation. That said, the advantages of further reducing optical-fiber diameter might be worthwhile for some optical-fiber applications.

As noted, the present optical fibers may include one or more coating layers (*e.g.*, a primary coating and a secondary coating). At least one of the coating layers - typically the secondary coating - may be colored and/or possess other markings to help identify individual fibers. Alternatively, a tertiary ink layer may surround the primary and secondary coatings.

In the specification and/or figures, typical embodiments of the invention have been disclosed. The present invention is not limited to such exemplary embodiments. The use of the term "and/or" includes any and all combinations of one or more of the associated listed items. The figures are schematic representations and so are not necessarily drawn to scale. Unless otherwise noted, specific terms have been used in a generic and descriptive sense and not for purposes of limitation.

**Claims**

1.   A multimode optical fiber, comprising:

* a central core surrounded by an outer optical cladding having a refractive index value $n_{cl}$, said central core having (*i*) an outer radius $r_1$ of about 36 microns or greater, (*ii*) a maximum refractive index value $n_0$, (*iii*) a graded-index profile with respect to said outer optical cladding, and (*iv*) a relative refractive index difference:

$$\Delta = \frac{n_0^2 - n_{cl}^2}{2n_0^2}\ ;$$

* an inner cladding positioned between said central core and said outer cladding, said inner cladding having an outer radius $r_2$; wherein the difference $r_2$-$r_1$ between said inner cladding's outer radius $r_2$ and said central core's outer radius $r_1$ is between about 1 micron and 3 microns, and
* a depressed trench positioned between said inner cladding and said outer optical cladding, said depressed trench having an outer radius $r_3$, a refractive index difference with respect to said outer optical cladding $\Delta n_3 = n_3 - n_{cl}$, and a volume $V_3$, wherein the volume V of a depressed trench is defined by the following equation:

$$V = 2\pi \times \int_{r_{\text{int}}}^{r_{ext}} \Delta\%(r) \times r \times dr$$

in which $r_{int}$ and $r_{ext}$ are the inner radius and outer radius of the depressed trench, respectively, and $\Delta\%(r)$ is the depressed trench's refractive index difference with respect to the outer cladding expressed in terms of percentage;

* wherein $\dfrac{\sqrt{2\Delta}}{r_1}$ is about 5.6x10$^{-3}$ $\mu$m$^{-1}$ or greater and wherein said depressed trench's volume $V_3$ is between about -1710 %-$\mu$m$^2$ and -635 %-$\mu$m$^2$.

2. Multimode optical fiber according to claim 1, wherein $\dfrac{\sqrt{2\Delta}}{r_1}$ is about 5.7x10$^{-3}$ $\mu$m$^{-1}$ or greater, even more preferably about 5.9x10$^{-3}$ $\mu$m$^{-1}$ or greater.

3. Multimode optical fiber according to any one of the preceding claims, wherein the central core's outer radius $r_1$ is equal to or lower than 50 microns.

4. Multimode optical fiber according to any one of the preceding claims, wherein the central core's outer radius $r_1$ is 37 microns or greater, more preferably 38 microns or greater, even more preferably 39 microns or greater, even more preferably 40 microns or greater, most preferably between about 39 microns and 41 microns.

5. Multlmode optical fiber according to any one of the preceding claims, wherein said depressed trench's volume $V_3$ is -650 %-$\mu$m$^2$ or greater, preferably $V_3$ is -670 %-$\mu$m$^2$ or greater, preferably $V_3$ is -710 %-$\mu$m$^2$ or greater, more preferably $V_3$ is -750 %-$\mu$m$^2$ or greater, even more preferably $V_3$ is -790 %-$\mu$m$^2$ or greater, even more preferably $V_3$ is -830 %-$\mu$m$^2$ or greater.

6. Multimode optical fiber according to any one of the preceding claims, wherein the difference $r_2$-$r_1$ between said inner cladding's outer radius $r_2$ and said central core's outer radius $r_1$ is equal to or lower than 2 micron.

7. Multimode optical fiber according to any one of the preceding claims, wherein the difference $r_3$-$r_2$ between said depressed trench's outer radius $r_3$ and said inner cladding's outer radius $r_2$ is between about 3 microns and 7 microns, preferably equal to or lower than 5 microns.

8. Multimode optical fiber according to any one of the preceding claims, Wherein the refractive index difference $\Delta n_3$ with respect to said outer optical cladding of between about -10x10$^{-3}$ and -5x10$^{-3}$.

9. Multimode optical fiber according to any one of the preceding claims, wherein, for two turns around a radius of curvature of 5 millimeters at a wavelength of 850 nanometers, the optical fiber has bending losses of less than about 0.3 dB, preferably less than about 0.2 dB.

10. Multimode optical fiber according to any one of the preceding claims, wherein said central core has an outer radius $r_1$ of below 50 microns, wherein said depressed trench has an outer radius $r_3$, a refractive index difference $\Delta n_3$ with respect to said outer optical cladding of between about - 10x10$^{-3}$ and -5x10$^{-3}$, and a volume $V_3$; wherein the difference $r_3$-$r_2$ between said depressed trench's outer radius $r_3$ and said inner cladding's outer radius $r_2$ is between about 3 microns and 7 microns; and wherein for two turns around a radius of curvature of 5 millimeters at a wavelength of 850 nanometers, the optical fiber has bending losses of less than about 0.3 dB.

11. An optical system comprising the optical fiber according to any one of the preceding claims.

**Patentansprüche**

1. Multimodale optische Faser, Folgendes umfassend:

* einen zentralen Kern, der von einem äußeren optischen Mantel mit einem Brechungsindexwert $n_{cl}$ umgeben ist, wobei der zentrale Kern (i) einen äußeren Radius $r_1$ von rund 36 Mikrometer oder mehr, (ii) einen maximalen Brechungsindexwert $n_0$, (iii) ein Gradientenindexprofil in Bezug auf den äußeren optischen Mantel und (iv) eine relative Brechungsindexdifferenz:

$$\Delta = \frac{n_0^2 - n_{cl}^2}{2n_0^2}$$

aufweist;

* einen inneren Mantel, der zwischen dem zentralen Kern und dem äußeren Mantel positioniert ist, wobei der innere Mantel einen äußeren Radius $r_2$ aufweist, wobei die Differenz $r_2$-$r_1$ zwischen dem äußeren Radius $r_2$ des inneren Mantels und dem äußeren Radius $r_1$ des zentralen Kerns zwischen rund 1 Mikrometer und 3 Mikrometer liegt; und

* einen Grabeneinsatz, der zwischen dem inneren Mantel und dem äußeren optischen Mantel positioniert ist, wobei der Grabeneinsatz einen äußeren Radius $r_3$, eine Brechungsindexdifferenz in Bezug auf den äußeren Glasfasermantel von $\Delta n_3 = n_3 - n_{cl}$ sowie ein Volumen $V_3$ aufweist, wobei das Volumen V eines Grabeneinsatzes durch die folgende Gleichung definiert wird:

$$V = 2\pi \times \int_{r_{int}}^{r_{ext}} \Delta\%(r) \times r \times dr$$

wobei gilt: $r_{int}$ und $r_{ext}$ sind der innere Radius bzw. der äußere Radius des Grabeneinsatzes, und $\Delta\%(r)$ ist die Brechungsindexdifferenz des Grabeneinsatzes in Bezug auf den äußeren Mantel, ausgedrückt als Prozentsatz;

* wobei $\frac{\sqrt{2\Delta}}{r_1}$ rund $5{,}6 \times 10^{-3}$ $\mu m^{-1}$ oder mehr beträgt und wobei das Volumen $V_3$ des Grabeneinsatzes zwischen $-1710$ %-$\mu m^2$ und $-635$ %-$\mu m^2$ liegt.

2. Multimodale optische Faser nach Anspruch 1, wobei $\frac{\sqrt{2\Delta}}{r_1}$ rund $5{,}7 \times 10^{-3}$ $\mu m^{-1}$ oder mehr, vorzugsweise rund $5{,}9 \times 10^{-3}$ $\mu m^{-1}$ oder mehr beträgt.

3. Multimodale optische Faser nach einem der vorangehenden Ansprüche, wobei der äußere Radius $r_1$ des zentralen Kerns gleich oder weniger als 50 Mikrometer beträgt.

4. Multimodale optische Faser nach einem der vorangehenden Ansprüche, wobei der äußere Radius $r_1$ des zentralen Kerns 37 Mikrometer oder mehr, vorzugsweise 38 Mikrometer oder mehr, mehr bevorzugt 39 Mikrometer oder mehr, noch mehr bevorzugt 40 Mikrometer oder mehr, am meisten bevorzugt zwischen rund 39 Mikrometer und 41 Mikrometer beträgt.

5. Multimodale optische Faser nach einem der vorangehenden Ansprüche, wobei das Volumen $V_3$ des Grabeneinsatzes $-650$ %-$\mu m^2$ oder mehrbeträgt, vorzugsweise ist $V_3$ $-670$ %-$\mu m^2$ oder mehr, vorzugsweise ist $V_3$ $-710$ %-$\mu m^2$ oder mehr, mehr bevorzugt ist $V_3$ $-750$ %-$\mu m^2$ oder mehr, noch mehr bevorzugt ist $V_3$ $-790$ %-$\mu m^2$ oder mehr, noch mehr bevorzugt ist $V_3$ $-830$ %-$\mu m^2$ oder mehr.

6. Multimodale optische Faser nach einem der vorangehenden Ansprüche, wobei die Differenz $r_2 - r_1$ zwischen dem äußeren Radius $r_2$ des inneren Mantels und dem äußeren Radius $r_1$ des zentralen Kerns gleich oder weniger als 2 Mikrometer beträgt.

7. Multimodale optische Faser nach einem der vorangehenden Ansprüche, wobei die Differenz $r_3 - r_2$ zwischen dem äußeren Radius $r_3$ des Grabeneinsatzes und dem äußeren Radius $r_2$ des inneren Mantels zwischen rund 3 Mikrometer und 7 Mikrometer liegt, vorzugsweise gleicher oder niedriger als 5 Mikrometer.

8.  Multimodale optische Faser nach einem der vorangehenden Ansprüche, wobei die Brechungsindexdifferenz $\Delta n_3$ in Bezug auf den äußeren optischen Mantel zwischen rund $-10 \times 10^{-3}$ und $-5 \times 10^{-3}$ liegt.

9.  Multimodale optische Faser nach einem der vorangehenden Ansprüche, wobei für zwei Drehungen um einen Krümmungsradius von 5 Millimetern bei einer Wellenlänge von 850 Nanometer die optische Faser Biegeverluste von weniger als rund 0,3 dB, vorzugsweise weniger als rund 0,2 dB aufweist.

10. Multimodale optische Faser nach einem der vorangehenden Ansprüche, wobei der zentrale Kern einen äußeren Radius $r_1$ von weniger als 50 Mikrometer aufweist, wobei der Grabeneinsatz einen äußeren Radius $r_3$, eine Brechungsindexdifferenz $\Delta n_3$ in Bezug auf den äußeren optischen Mantel von zwischen rund $-10 \times 10^{-3}$ und $-5 \times 10^{-3}$ sowie ein Volumen $V_3$ aufweist, wobei die Differenz $r_3 - r_2$ zwischen dem äußeren Radius $r_3$ des Grabeneinsatzes und dem äußeren Radius $r_2$ des inneren Mantels zwischen rund 3 Mikrometer und 7 Mikrometer liegt und wobei für zwei Umdrehungen um einen Krümmungsradius von 5 Millimetern bei einer Wellenlänge von 850 Nanometer die optische Faser Biegeverluste von weniger als rund 0,3 dB aufweist.

11. Optisches System, die optische Faser nach einem der vorangehenden Ansprüche umfassend.

**Revendications**

1.  Fibre optique multimodale, comprenant :

    * un coeur central entouré d'une gaine optique externe ayant une valeur d'indice de réfraction $n_{cl}$, ledit coeur central ayant (i) un rayon extérieur $r_1$ d'environ 36 microns ou plus, (ii) une valeur d'indice de réfraction maximale $n_0$, (iii) un profil à gradient d'indice par rapport à ladite gaine optique externe, et (iv) une différence d'indice de réfraction relative :

    $$\Delta = \frac{n_0^2 - n_{cl}^2}{2n_0^2} \; ;$$

    * une gaine interne positionnée entre ledit coeur central et ladite gaine externe, ladite gaine interne ayant un rayon extérieur $r_2$ ; où la différence $r_2 - r_1$ entre ledit rayon extérieur $r_2$ de la gaine interne et ledit rayon extérieur $r_1$ du coeur central est comprise entre environ 1 micron et 3 microns, et
    * une tranchée enfoncée positionnée entre ladite gaine interne et ladite gaine optique externe, ladite tranchée enfoncée ayant un rayon extérieur $r_3$, une différence d'indice de réfraction par rapport à ladite gaine optique externe $\Delta n_3 = n_3 - n_{cl}$ et un volume $V_3$, où le volume $V$ d'une tranchée enfoncée est défini par l'équation suivante :

    $$V = 2\pi \times \int_{r_{int}}^{r_{ext}} \Delta\%(r) \times r \times dr$$

    dans laquelle $r_{int}$ et $r_{ext}$ représentent les rayon intérieur et le rayon extérieur de la tranchée enfoncée, respectivement, et $\Delta\%(r)$ représente la différence d'indice de réfraction de la tranchée enfoncée par rapport à la gaine externe exprimée en termes de pourcentage ;

    * où $\dfrac{\sqrt{2\Delta}}{r_1}$ est d'environ $5,6 \times 10^{-3}$ $\mu m^{-1}$ ou plus et où ledit volume de la tranchée enfoncée $V_3$ est compris entre environ $-1710\%\text{-}\mu m^2$ et $-635\%\text{-}\mu m^2$.

2.  Fibre optique multimodale selon la revendication 1, dans laquelle $\dfrac{\sqrt{2\Delta}}{r_1}$ est d'environ $5,7 \times 10^{-3}$ $\mu m^{-1}$ ou plus, encore plus préférablement d'environ $5,9 \times 10^{-3}$ $\mu m^{-1}$ ou plus.

3.  Fibre optique multimodale selon l'une quelconque des revendications précédentes, dans laquelle le rayon extérieur

$r_1$ du coeur central est inférieur ou égal à 50 microns.

4. Fibre optique multimodale selon l'une quelconque des revendications précédentes, dans laquelle le rayon extérieur $r_1$ du coeur central est de 37 microns ou plus, plus préférablement de 38 microns ou plus, encore plus préférablement de 39 microns ou plus, encore plus préférablement de 40 microns ou plus, idéalement compris entre environ 39 microns et 41 microns.

5. Fibre optique multimodale selon l'une quelconque des revendications précédentes, dans laquelle ledit volume de la tranchée enfoncée $V_3$ est de -650%-$\mu m^2$ ou plus, de préférence $V_3$ est de -670%-$\mu m^2$ ou plus, de préférence $V_3$ est de -710%-$\mu m^2$ ou plus, plus préférablement $V_3$ est de -750%-$\mu m^2$ ou plus, encore plus préférablement $V_3$ est de -790%-$\mu m^2$ ou plus, encore plus préférablement $V_3$ est de -830%-$\mu m^2$ ou plus.

6. Fibre optique multimodale selon l'une quelconque des revendications précédentes, dans laquelle la différence $r_2 - r_1$ entre ledit rayon extérieur $r_2$ de la gaine interne et ledit rayon extérieur $r_1$ du coeur central est inférieure ou égale à 2 microns.

7. Fibre optique multimodale selon l'une quelconque des revendications précédentes, dans laquelle la différence $r_3 - r_2$ entre ledit rayon extérieur $r_3$ de la tranchée enfoncée et ledit rayon extérieur $r_2$ de la gaine interne est comprise entre environ 3 microns et 7 microns, de préférence inférieure ou égale à 5 microns.

8. Fibre optique multimodale selon l'une quelconque des revendications précédentes, dans laquelle la différence d'indice de réfraction $\Delta n_3$ par rapport à ladite gaine optique externe est comprise entre environ $-10 \times 10^{-3}$ et $-5 \times 10^{-3}$.

9. Fibre optique multimodale selon l'une quelconque des revendications précédentes, dans laquelle, pour deux tours autour d'un rayon de courbure de 5 millimètres à une longueur d'onde de 850 nanomètres, la fibre optique présente des pertes dues à la courbure inférieures à environ 0,3 dB, de préférence inférieures à environ 0,2 dB.

10. Fibre optique multimodale selon l'une quelconque des revendications précédentes, dans laquelle ledit coeur central a un rayon extérieur $r_1$ inférieur à 50 microns,
dans laquelle ladite tranchée enfoncée a un rayon extérieur $r_3$, une différence d'indice de réfraction $\Delta n_3$ par rapport à ladite gaine optique externe comprise entre environ $-10 \times 10^{-3}$ et $-5 \times 10^{-3}$, et un volume $V_3$ ; où la différence $r_3 - r_2$ entre ledit rayon extérieur $r_3$ de la tranchée enfoncée et ledit rayon extérieur $r_2$ de la gaine interne est comprise entre environ 3 microns et 7 microns ; et où pour deux tours autour d'un rayon de courbure de 5 millimètres à une longueur d'onde de 850 nanomètres, la fibre optique présente des pertes dues à la courbure inférieures à environ 0,3 dB.

11. Système optique comprenant la fibre optique selon l'une quelconque des revendications précédentes.

Fig.1

Fig.2

Fig.3

Fig. 4

Pinch Point

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010036684 A
- WO 2011109263 A
- US 401026 A

**Non-patent literature cited in the description**

- **D. GLOGE et al.** Multimode Theory of Graded-Core Fibers. *Bell system Technical Journal,* 1973, 1563-1578
- **G. YABRE.** Comprehensive Theory of Dispersion in Graded-Index Optical Fibers. *Journal of Lightwave Technology,* February 2000, vol. 18 (2), 166-177
- **D. MOLIN ; M. BIGOT-ASTRUC ; P. SILLARD.** 80μm-core graded-index MMF for consumer electronic devices. *Optoelectronic Interconnects XII, February 2, 2012, Proceedings of SPIE,* 02 February 2012, vol. 8267